# EUROPÄISCHE PATENTSCHRIFT

(11) **EP 3 383 136 B1**
(45) Veröffentlichungstag und Bekanntmachung des Hinweises auf die Patenterteilung: **30.11.2022**
(21) Anmeldenummer: 18161015.5
(22) Anmeldetag: 09.03.2018
(51) Int. Cl.: H05B 6/12, H02J 50/10

(54) **INDUKTIONSKOCHFELDVORRICHTUNG**
INDUCTION COOKING HOB
PLAQUE DE CUISSON À INDUCTION

(30) Priorität: 30.03.2017 ES 201730500
(43) Veröffentlichungstag der Anmeldung: 03.10.2018
(73) Patentinhaber: BSH Hausgeräte GmbH, 81739 München (DE)
(72) Erfinder: Acero Acero, Jesus, 50002 Zaragoza (ES); Carretero Chamarro, Claudio, 50003 Zaragoza (ES); Hernandez Blasco, Pablo Jesus, 50019 Zaragoza (ES); Llorente Gil, Sergio, 50009 Zaragoza (ES); Lope Moratilla, Ignacio, 50010 Zaragoza (ES); Moya Albertin, Maria Elena, 50002 Zaragoza (ES); Serrano Trullen, Javier, 50017 Zaragoza (ES)

(56) Entgegenhaltungen:
- EP-A1- 1 858 300
- EP-A1- 2 991 446
- DE-A1- 19 845 844
- US-A1- 2009 084 777

## Beschreibung

Die Erfindung betrifft eine Induktionskochfeldvorrichtung nach dem Oberbegriff des Anspruchs 1 und ein Verfahren zu einem Betrieb einer Induktionskochfeldvorrichtung nach dem Oberbegriff des Anspruchs 9.

Aus der europäischen Patentanmeldung EP 1 858 300 A1 ist bereits eine Induktionskochfeldvorrichtung mit einer Vielzahl von überlappenden Induktionsheizelementen bekannt. Die Induktionsheizelemente sind in mehreren Ebenen übereinander angeordnet. In jeder der Ebenen ist ein Teil der Induktionsheizelemente in Form einer Matrix koplanar relativ zueinander angeordnet. Für derartig überlappend angeordnete Induktionsheizelemente ist eine Anordnung von Magnetflussbündelungselementen einer Magnetflussbündelungseinheit, wie dies für den Fall von klassisch angeordneten Induktionsheizelementen bekannt ist, aufgrund der überlappenden Anordnung der Induktionsheizelemente nicht praktikabel.

Aus der europäischen Patentanmeldung EP 2 991446 A1 ist eine weitere Induktionskochfeldvorrichtung gemäß dem Oberbegriff des Anspruchs 1 bekannt.

Die Aufgabe der Erfindung besteht insbesondere darin, eine gattungsgemäße Vorrichtung vorteilhaft weiterzuentwickeln. Die Aufgabe wird erfindungsgemäß durch die Merkmale der Ansprüche 1 und 9 gelöst, während vorteilhafte Ausgestaltungen und Weiterbildungen der Erfindung den Unteransprüchen entnommen werden können.

Die Erfindung geht aus von einer Induktionskochfeldvorrichtung mit zumindest zwei überlappenden Induktionsheizelementen.

In einem Aspekt der Erfindung, welcher für sich allein genommen als auch in Kombination mit weiteren Aspekten der Erfindung betrachtet werden kann, wird vorgeschlagen, dass die Induktionskochfeldvorrichtung zumindest eine Magnetflussbündelungseinheit aufweist, die zu einer Bündelung zumindest eines von zumindest einem der Induktionsheizelemente bereitgestellten magnetischen Flusses vorgesehen ist und die zumindest ein Magnetflussbündelungselement aufweist, welches zur Flussbündelung den überlappenden Induktionsheizelementen zugeordnet ist.

Durch die erfindungsgemäße Ausgestaltung kann eine gattungsgemäße Vorrichtung vorteilhaft weiterentwickelt werden. Aufgrund des den überlappenden Induktionsheizelementen zugeordneten Magnetflussbündelungselements kann insbesondere eine geringe Anzahl an Magnetflussbündelungselementen ermöglicht werden, wodurch insbesondere geringe Kosten und/oder ein geringes Gesamtgewicht und/oder ein geringer Bauraumbedarf, insbesondere eine geringe Bauhöhe, erzielt werden können. Insbesondere kann eine optimale Beheizung eines insbesondere aufgestellten Gargeschirrs ermöglicht werden, und zwar insbesondere aufgrund einer von der Magnetflussbündelungseinheit bewirkten optimalen Flussbündelung des von zumindest einem der Induktionsheizelemente bereitgestellten magnetischen Flusses. Im Fall von zumindest zwei überlappenden Induktionsheizelementen kann insbesondere durch das den überlappenden Induktionsheizelementen zugeordnete Magnetflussbündelungselement eine insbesondere negative Beeinflussung zwischen jeweils genau einem der Induktionsheizelemente zugeordneten Magnetflussbündelungselement und/oder eine unsymmetrische Beheizung eines insbesondere aufgestellten Gargeschirrs vermieden werden. Insbesondere kann eine Anwendung auf Kochfelder und vorteilhaft auf Matrixkochfeld mit überlappenden Induktionsheizelementen bewirkt werden. Insbesondere in Bezug auf eine Anordnung der Magnetflussbündelungseinheit kann insbesondere ein hoher Grad an Symmetrie erzielt werden, wodurch insbesondere eine gute Wärmeverteilung innerhalb eines insbesondere aufgestellten Gargeschirrs erreicht werden kann.

Unter einer "Induktionskochfeldvorrichtung" soll insbesondere zumindest ein Teil, insbesondere eine Unterbaugruppe, eines Induktionskochfelds verstanden werden. Das Induktionsheizelement ist insbesondere dazu vorgesehen, ein elektromagnetisches Wechselfeld insbesondere mit einer Frequenz in einem Bereich von 20 kHz bis 100 kHz zu erzeugen, das insbesondere dazu vorgesehen ist, in einem aufgestellten, insbesondere metallischen, vorzugsweise ferromagnetischen Gargeschirrboden durch Wirbelstrominduktion und/oder Ummagnetisierungseffekte in Wärme umgewandelt zu werden. Insbesondere weist die Induktionskochfeldvorrichtung zumindest vier, insbesondere zumindest sechs, vorteilhaft zumindest acht, besonders vorteilhaft zumindest zehn, vorzugsweise zumindest zwölf und besonders bevorzugt eine Vielzahl von Induktionsheizelemente(n) auf.

Unter zumindest zwei "überlappenden" Induktionsheizelementen soll verstanden werden, dass ein erstes Induktionsheizelement der Induktionsheizelemente zumindest einen ersten Teilbereich und ein zweites Induktionsheizelement der Induktionsheizelemente zumindest einen zweiten Teilbereich aufweist, der bei einer senkrechten Betrachtung auf zumindest eine Haupterstreckungsebene wenigstens eines der Induktionsheizelemente mit dem ersten Teilbereich zusammenfällt und insbesondere in der Haupterstreckungsebene denselben Platz einnimmt wie der erste Teilbereich. Bei einer senkrechten Betrachtung auf zumindest eine Haupterstreckungsebene wenigstens eines der Induktionsheizelementesind der erste Teilbereich und der zweite Teilbereich insbesondere deckungsgleich zueinander angeordnet.

Beispielsweise könnten die überlappenden Induktionsheizelemente wenigstens teilweise überlappend angeordnet sein. Bei einer senkrechten Betrachtung auf zumindest eine Haupterstreckungsebene wenigstens eines der Induktionsheizelemente könnte der erste Teilbereich insbesondere einen Anteil von mindestens 5 %, insbesondere von mindestens 10 %, vorteilhaft von mindestens 20 %, besonders vorteilhaft von mindestens 25 % und vorzugsweise von mindestens 30 % einer Flächenerstreckung des ersten Induktionsheizelements in der Haupterstreckungsebene aufweisen. Insbesondere könnte der zweite Teilbereich bei einer senkrechten Betrachtung auf zumindest eine Haupterstreckungsebene wenigstens eines der Induktionsheizelemente einen Anteil von mindestens 5 %, insbesondere von mindestens 10 %, vorteilhaft von mindestens 20 %, besonders vorteilhaft von mindestens 25 % und vorzugsweise von mindestens 30 % einer Flächenerstreckung des zweiten Induktionsheizelements in der Haupterstreckungsebene aufweisen. Ein Mittelpunkt und/oder Schwerpunkt des ersten Teilbereichs und ein Mittelpunkt und/oder Schwerpunkt des zweiten Teilbereichs könnte bei einer senkrechten Betrachtung auf zumindest eine Haupterstreckungsebene wenigstens eines der Induktionsheizelemente insbesondere einen Abstand von mindestens 15 %, insbesondere von mindestens 20 %, vorteilhaft von mindestens 25 % einer Längserstreckung eines kleineren der Induktionsheizelemente aufweisen. Ein Mittelpunkt und/oder Schwerpunkt des ersten Teilbereichs und ein Mittelpunkt und/oder Schwerpunkt des zweiten Teilbereichs könnten bei einer senkrechten Betrachtung auf zumindest eine Haupterstreckungsebene wenigstens eines der Induktionsheizelemente insbesondere einen Abstand von maximal 40 %, vorteilhaft von maximal 35 % und vorzugsweise von maximal 30 % einer Längserstreckung eines kleineren der Induktionsheizelemente aufweisen.

Alternativ oder zusätzlich könnten die überlappenden Induktionsheizelemente wenigstens im Wesentlichen vollständig überlappend angeordnet sein. Bei einer senkrechten Betrachtung auf zumindest eine Haupterstreckungsebene wenigstens eines der Induktionsheizelemente könnte der erste Teilbereich insbesondere einen Anteil von mindestens 75 %, insbesondere von mindestens 80 %, vorteilhaft von mindestens 85 %, besonders vorteilhaft von mindestens 90 % und vorzugsweise von mindestens 95 % einer Flächenerstreckung des ersten Induktionsheizelements in der Haupterstreckungsebene aufweisen. Insbesondere könnte der zweite Teilbereich bei einer senkrechten Betrachtung auf zumindest eine Haupterstreckungsebene wenigstens eines der Induktionsheizelemente einen Anteil von mindestens 75 %, insbesondere von mindestens 80 %, vorteilhaft von mindestens 85 %, besonders vorteilhaft von mindestens 90 % und vorzugsweise von mindestens 95 % einer Flächenerstreckung des zweiten Induktionsheizelements in der Haupterstreckungsebene aufweisen. Ein Mittelpunkt und/oder Schwerpunkt des ersten Teilbereichs und ein Mittelpunkt und/oder Schwerpunkt des zweiten Teilbereichs könnten bei einer senkrechten Betrachtung auf zumindest eine Haupterstreckungsebene wenigstens eines der Induktionsheizelemente insbesondere einen Abstand von maximal 40 %, vorteilhaft von maximal 45 % und vorzugsweise von maximal 50 % einer Längserstreckung eines kleineren der Induktionsheizelemente aufweisen.

Unter einer "Haupterstreckungsebene" eines Objekts soll eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Unter einer "Längserstreckung" eines Objekts soll eine Erstreckung des Objekts entlang einer Längserstreckungsrichtung des Objekts verstanden werden. Unter einer "Längserstreckungsrichtung" eines Objekts soll eine Richtung verstanden werden, welche parallel zu einer längsten Seite eines kleinsten gedachten geometrischen Quaders ausgerichtet ist, welcher das Objekt gerade noch vollständig umschließt. Unter einer "Erstreckung" eines Objekts soll insbesondere ein maximaler Abstand zweier Punkte einer senkrechten Projektion des Objekts auf eine Ebene verstanden werden.

Beispielsweise könnten die Induktionsheizelemente bei einer senkrechten Betrachtung auf zumindest eine Haupterstreckungsebene wenigstens eines der Induktionsheizelemente eine wenigstens im Wesentlichen polygonale Gestalt aufweisen, wie beispielsweise eine wenigstens im Wesentlichen rechteckige und/oder quadratische und/oder n-eckige Gestalt. Vorteilhaft weisen die Induktionsheizelemente bei einer senkrechten Betrachtung auf zumindest eine Haupterstreckungsebene wenigstens eines der Induktionsheizelemente eine wenigstens im Wesentlichen ovale Gestalt auf. Die Induktionsheizelemente könnten bei einer senkrechten Betrachtung auf zumindest eine Haupterstreckungsebene wenigstens eines der Induktionsheizelemente eine wenigstens im Wesentlichen kreisförmige Gestalt aufweisen. Alternativ oder zusätzlich könnten die Induktionsheizelemente bei einer senkrechten Betrachtung auf zumindest eine Haupterstreckungsebene wenigstens eines der Induktionsheizelemente eine wenigstens im Wesentlichen ellipsenförmige Gestalt aufweisen.

Die Induktionskochfeldvorrichtung könnte beispielsweise zumindest eine Leiterplatte aufweisen, an welcher die Induktionsheizelemente beispielsweise angeordnet sein könnten. Die Leiterplatte könnte insbesondere zumindest eine Lage aufweisen, an welcher die Induktionsheizelemente insbesondere angeordnet sind. Vorteilhaft könnte die Leiterplatte zumindest zwei und vorzugsweise zumindest drei Lagen aufweisen, an welchen die Induktionsheizelemente insbesondere angeordnet sind. Insbesondere könnten die Induktionsheizelemente auf die Leiterplatte und insbesondere auf die Lagen der Leiterplatte aufgedruckt sein.

Alternativ oder zusätzlich könnten die Induktionsheizelemente jeweils zumindest eine Heizleitung aufweisen, welche sich insbesondere über verschiedene Ebenen erstrecken könnte. Beispielsweise könnte jedes Induktionsheizelement zumindest einen Spulenträger aufweisen, an welchem die entsprechende Heizleitung, insbesondere auf zwei einander gegenüberliegenden Seiten in Bezug auf eine Haupterstreckungsebene des Spulenträgers, gewickelt sein könnte.

Die Magnetflussbündelungseinheit und insbesondere das Magnetflussbündelungselement besteht insbesondere wenigstens zu einem Großteil aus Ferriten, welche insbesondere ferromagnetische keramische Werkstoffe sind.

Unter der Wendung, dass ein Magnetflussbündelungselement einem Induktionsheizelement "zugeordnet" ist, soll verstanden werden, dass das Magnetflussbündelungselement in wenigstens einem Betriebszustand, in welchem das Induktionsheizelement insbesondere betrieben ist und insbesondere einen magnetischen Fluss bereitstellt, den von dem Induktionsheizelement bereitgestellten magnetischen Fluss wenigstens teilweise bündelt. Ein Magnetflussbündelungselement, welches insbesondere den überlappenden Induktionsheizelementen zugeordnet ist, bündelt in wenigstens einem Betriebszustand insbesondere wenigstens teilweise einen jeweiligen von sämtlichen sich in Betrieb befindenden Induktionsheizelementen der überlappenden Induktionsheizelemente, welchen das Magnetflussbündelungselement insbesondere zugeordnet ist, bereitgestellten magnetischen Fluss. Unter der Wendung, dass ein Magnetflussbündelungselement einen magnetischen Fluss "wenigstens teilweise" bündelt, soll insbesondere verstanden werden, dass das Magnetflussbündelungselement den magnetischen Fluss alleine bündelt oder dass das Magnetflussbündelungselement den magnetischen Fluss gemeinsam mit zumindest einem zweiten Magnetflussbündelungselement bündelt.

Das den überlappenden Induktionsheizelementen zugeordnete Magnetflussbündelungselement ist insbesondere in einem Nahbereich zumindest eines der Induktionsheizelemente und vorteilhaft in einem Nahbereich eines jeden der überlappenden Induktionsheizelementen angeordnet. Bei einer senkrechten Betrachtung auf zumindest eine Haupterstreckungsebene wenigstens eines der Induktionsheizelemente ist das den überlappenden Induktionsheizelementen zugeordnete Magnetflussbündelungselement insbesondere wenigstens zu einem Großteil innerhalb einer von den überlappenden Induktionsheizelementen aufgespannten Fläche angeordnet. Das den überlappenden Induktionsheizelementen zugeordnete Magnetflussbündelungselement ist insbesondere frei von einer Sättigung. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden.

Unter "vorgesehen" soll speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einem weiteren Aspekt der Erfindung, welcher für sich allein genommen als auch in Kombination mit weiteren Aspekten der Erfindung betrachtet werden kann, wird vorgeschlagen, dass die Induktionskochfeldvorrichtung zumindest eine Magnetflussbündelungseinheit, insbesondere die zuvor genannte Magnetflussbündelungseinheit, aufweist, die zu einer Bündelung zumindest eines von zumindest einem der Induktionsheizelemente bereitgestellten magnetischen Flusses vorgesehen ist, wobei die Magnetflussbündelungseinheit und die Induktionsheizelemente bezüglich zumindest einer Haupterstreckungsebene zumindest eines der Induktionsheizelemente in zumindest zwei räumlich voneinander getrennten Schichten angeordnet sind. Insbesondere sind die Schichten in wenigstens einem montierten Zustand wenigstens im Wesentlichen parallel zueinander angeordnet. In wenigstens einem montierten Zustand sind die Schichten insbesondere wenigstens im Wesentlichen parallel zu der Haupterstreckungsebene und/oder zu zumindest einer Kochfeldplatte angeordnet. Die Induktionskochfeldvorrichtung weist insbesondere zumindest eine Kochfeldplatte auf, welche insbesondere zu einem Aufstellen von Gargeschirr vorgesehen ist und insbesondere wenigstens zu einem Großteil aus Glas und/oder Glaskeramik besteht. Unter wenigstens "wenigstens im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Die Schichten sind insbesondere bezüglich zumindest einer Richtung, in welcher die Schichten insbesondere benachbart zueinander angeordnet sind, überlappungsfrei zueinander angeordnet. Ausgehend von zumindest einem Punkt innerhalb einer ersten der Schichten und bei Fortschreiten in zumindest einer Richtung, in welcher die Schichten insbesondere benachbart zueinander angeordnet sind, schneidet eine die Schichten verbindende Gerade insbesondere zunächst eine Begrenzung der ersten Schicht und anschließend eine Begrenzung einer zweiten der Schichten. Dadurch kann insbesondere eine einfache Montage erreicht werden. Insbesondere kann eine modulare Bauweise ermöglicht werden, wodurch insbesondere einzelne Komponenten separat gefertigt und/oder gekauft werden können.

Zudem wird vorgeschlagen, dass das Magnetflussbündelungselement bei einer senkrechten Betrachtung auf zumindest eine Haupterstreckungsebene wenigstens eines der Induktionsheizelemente entlang einer gedachten Verbindungslinie von Schwerpunkten und/oder Mittelpunkten der Induktionsheizelemente angeordnet ist, wodurch insbesondere eine optimale Flussbündelung erzielt werden kann.

Beispielsweise könnte die Magnetflussbündelungseinheit ausschließlich das den überlappenden Induktionsheizelementen zugeordnete Magnetflussbündelungselement aufweisen. Vorzugsweise weist die Magnetflussbündelungseinheit zumindest ein weiteres Magnetflussbündelungselement auf, welches zumindest einem der Induktionsheizelemente zugeordnet ist, wodurch insbesondere eine optimale Beheizung eines insbesondere aufgestellten Gargeschirrs erreicht werden kann.

Das weitere Magnetflussbündelungselement könnte beispielsweise zumindest zwei, insbesondere überlappenden Induktionsheizelementen zugeordnet sein.

Erfindungsgemäß ist zumindest eines der überlappenden Induktionsheizelemente, welchen das weitere Magnetflussbündelungselement zugeordnet ist, identisch sein mit zumindest einem der überlappenden Induktionsheizelemente, welchen das Magnetflussbündelungselement zugeordnet ist. Nicht erfindungsgemäß könnte zumindest eines der überlappenden Induktionsheizelemente, welchen das weitere Magnetflussbündelungselement zugeordnet ist, verschieden sein zu zumindest einem der überlappenden Induktionsheizelemente, welchen das Magnetflussbündelungselement zugeordnet ist. Vorzugsweise ist das weitere Magnetflussbündelungselement genau einem der Induktionsheizelemente zugeordnet. Dadurch kann insbesondere gezielt auf örtliche Gegebenheiten und/oder Gestalten von Induktionsheizelementen eingegangen werden, wodurch insbesondere eine hohe Flexibilität und/oder eine optimierte Flussbündelung ermöglicht werden kann.

Zudem wird vorgeschlagen, dass den Induktionsheizelementen jeweils eine identische Anzahl an Magnetflussbündelungselementen zugeordnet ist. Insbesondere entspricht eine Anzahl an Magnetflussbündelungselementen, welche einem ersten Induktionsheizelement der Induktionsheizelemente zugeordnet ist, einer Anzahl an Magnetflussbündelungselementen, welche einem von dem ersten verschiedenen zweiten Induktionsheizelement der Induktionsheizelemente zugeordnet ist. Dadurch kann insbesondere eine gleichmäßige Beheizung eines insbesondere aufgestellten Gargeschirrs erreicht und/oder eine automatisierte Fertigung und/oder Montage ermöglicht werden.

Weiterhin wird vorgeschlagen, dass das Magnetflussbündelungselement eine Längserstreckung aufweist, welche sich von einer Längserstreckung des weiteren Magnetflussbündelungselements unterscheidet. Beispielsweise könnte die Längserstreckung des Magnetflussbündelungselements kleiner sein als die Längserstreckung des weiteren Magnetflussbündelungselements. Insbesondere könnte die Längserstreckung des Magnetflussbündelungselements größer sein als die Längserstreckung des weiteren Magnetflussbündelungselements. Unter der Wendung, dass sich die Längserstreckung des Magnetflussbündelungselements von der Längserstreckung des weiteren Magnetflussbündelungselements "unterscheidet", soll insbesondere verstanden werden, dass eine erste Längserstreckung der Längserstreckungen größer ist als eine zweite Längserstreckung der Längserstreckungen, wobei insbesondere ein Quotient aus der zweiten Längserstreckung und der ersten Längserstreckung einen Wert von maximal 0,9, insbesondere von maximal 0,85, vorteilhaft von maximal 0,8, besonders vorteilhaft von maximal 0,7 und vorzugsweise von maximal 0,6 annimmt. Dadurch können den Induktionsheizelementen insbesondere besonders flexibel und nach Bedarf Magnetflussbündelungselemente mit bedarfsgerechter Längserstreckung zugeordnet werden, wodurch der von dem entsprechenden Induktionsheizelement bereitgestellte Fluss optimal gebündelt werden kann.

Ferner wird vorgeschlagen, dass das Magnetflussbündelungselement und das weitere Magnetflussbündelungselement wenigstens im Wesentlichen identisch ausgebildet sind. Das Magnetflussbündelungselement und das weitere Magnetflussbündelungselement weisen insbesondere eine wenigstens im Wesentlichen gleiche Form und/oder Gestalt auf. Insbesondere weist das Magnetflussbündelungselement eine Erstreckung in zumindest einer Erstreckungsrichtung auf, welche einer weiteren Erstreckung des weiteren Magnetflussbündelungselements in der Erstreckungsrichtung wenigstens im Wesentlichen entspricht. Ein Quotient aus einer kürzeren der Erstreckungen und einer längeren der Erstreckungen beträgt insbesondere mindestens 0,92, vorteilhaft mindestens 0,95, besonders vorteilhaft mindestens 0,97 und vorzugsweise mindestens 0,99. Die Erstreckung könnte insbesondere eine Längserstreckung und/oder eine Quererstreckung und/oder eine Dicke sein. Dadurch kann insbesondere eine geringe Lagerhaltung erreicht werden.

Das weitere Magnetflussbündelungselement könnte bei einer senkrechten Betrachtung auf zumindest eine Haupterstreckungsebene wenigstens eines der Induktionsheizelemente beispielsweise innerhalb einer von dem Induktionsheizelement, welchem das weitere Magnetflussbündelungselement insbesondere zugeordnet sein könnte, aufgespannten Fläche angeordnet sein. Vorteilhaft überragt das weitere Magnetflussbündelungselement das Induktionsheizelement, welchem das weitere Magnetflussbündelungselement insbesondere zugeordnet ist, bei einer senkrechten Betrachtung auf zumindest eine Haupterstreckungsebene wenigstens eines der Induktionsheizelemente wenigstens teilweise. Insbesondere weist das weitere Magnetflussbündelungselement zumindest einen Überragungsteilbereich auf, welcher bei einer senkrechten Betrachtung auf zumindest eine Haupterstreckungsebene wenigstens eines der Induktionsheizelemente insbesondere außerhalb einer von dem Induktionsheizelement, welchem das weitere Magnetflussbündelungselement insbesondere zugeordnet ist, aufgespannten Fläche angeordnet ist. Insbesondere nimmt der Überragungsteilbereich einen Massenanteil und/oder Volumenanteil des Magnetflussbündelungselements von maximal 20 %, insbesondere von maximal 15 %, vorteilhaft von maximal 10 %, besonders vorteilhaft von maximal 5 % und vorzugsweise von maximal 2 % an. Insbesondere ist das Magnetflussbündelungselement bei einer senkrechten Betrachtung auf zumindest eine Haupterstreckungsebene wenigstens eines der Induktionsheizelemente wenigstens zu einem Großteil innerhalb einer von dem Induktionsheizelement, welchem das weitere Magnetflussbündelungselement insbesondere zugeordnet ist, aufgespannten Fläche angeordnet. Dadurch kann insbesondere ein von dem Induktionsheizelement bereitgestellter magnetischer Fluss besonders effektiv gebündelt werden.

Eine gattungsgemäße Vorrichtung kann insbesondere besonders vorteilhat weiterentwickelt werden durch ein Verfahren zu einem Betrieb einer Induktionskochfeldvorrichtung mit zumindest zwei überlappenden Induktionsheizelementen, wobei ein von den Induktionsheizelementen bereitgestellter magnetischer Fluss gemeinsam gebündelt wird.

Die Induktionskochfeldvorrichtung soll hierbei nicht auf die oben beschriebene Anwendung und Ausführungsform beschränkt sein. Insbesondere kann die Induktionskochfeldvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt.

Es zeigen:
- Fig. 1: ein Induktionskochfeld mit einer Induktionskochfeldvorrichtung in einer schematischen Draufsicht,
- Fig. 2: überlappende Induktionsheizelemente und eine Magnetflussbündelungseinheit der Induktionskochfeldvorrichtung in einer schematischen Draufsicht auf eine Haupterstreckungsebene der Induktionsheizelemente, wobei Magnetflussbündelungselemente der Magnetflussbündelungseinheit, welche zumindest zwei Induktionsheizelementen zugeordnet sind, in den Figuren mit einer einfachen Linienschraffur und Magnetflussbündelungselemente, welche genau einem der Induktionsheizelemente zugeordnet sind, mit einer doppelten Linienschraffur gekennzeichnet sind,
- Fig. 3: die Magnetflussbündelungseinheit und ein Raumteilerelement der Induktionskochfeldvorrichtung in einer schematischen Draufsicht,
- Fig. 4: einen Ausschnitt der Induktionskochfeldvorrichtung in einer schematischen Schnittdarstellung,
- Fig. 5: eine alternative Induktionskochfeldvorrichtung in einer schematischen Draufsicht,
- Fig. 6: eine weitere alternative Induktionskochfeldvorrichtung in einer schematischen Draufsicht,
- Fig. 7: eine weitere alternative Induktionskochfeldvorrichtung in einer schematischen Draufsicht,
- Fig. 8: eine weitere alternative Induktionskochfeldvorrichtung in einer schematischen Draufsicht,
- Fig. 9: eine weitere alternative Induktionskochfeldvorrichtung in einer schematischen Draufsicht,
- Fig. 10: eine weitere alternative Induktionskochfeldvorrichtung in einer schematischen Draufsicht und
- Fig. 11: eine weitere alternative Induktionskochfeldvorrichtung in einer schematischen Draufsicht.

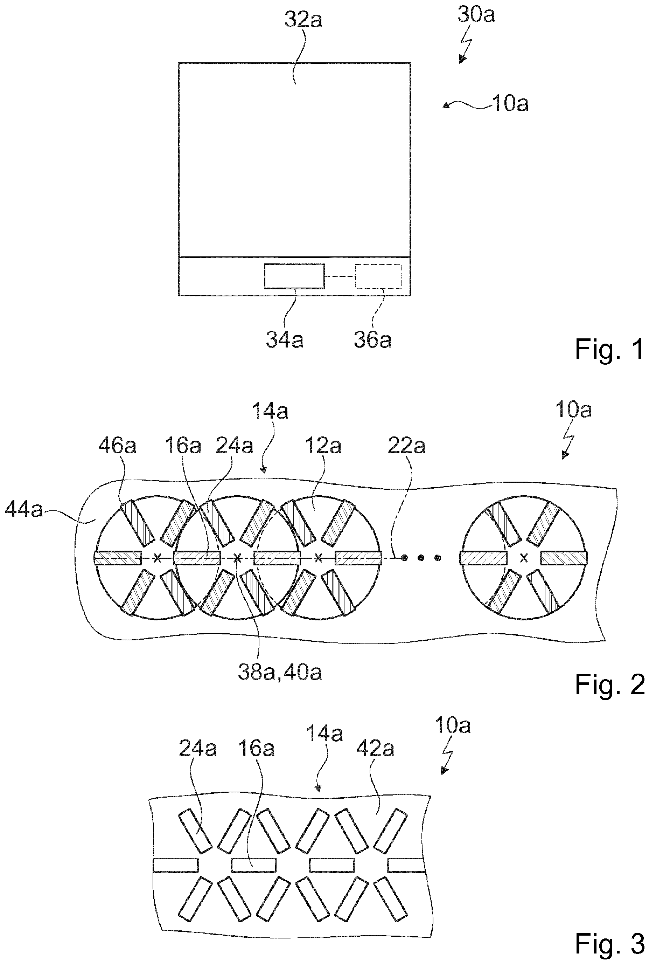

Fig. 1 zeigt ein Induktionskochfeld 30a mit einer Induktionskochfeldvorrichtung 10a. Die Induktionskochfeldvorrichtung 10a weist eine Kochfeldplatte 32a auf. In einem montierten Zustand bildet die Kochfeldplatte 32a einen Teil eines Kochfeldaußengehäuses, insbesondere des Induktionskochfelds 30a, aus. Die Kochfeldplatte 32a bildet in einer Einbaulage einen einem Bediener zugewandten Teil des Kochfeldaußengehäuses aus. In einem montierten Zustand ist die Kochfeldplatte 32a zu einem Aufstellen von Gargeschirr vorgesehen.

Die Induktionskochfeldvorrichtung 10a weist eine Bedienerschnittstelle 34 zu einer Eingabe und/oder Auswahl von Betriebsparametern (vgl. Fig. 1), beispielsweise einer Heizleistung und/oder einer Heizleistungsdichte und/oder einer Heizzone auf. Die Bedienerschnittstelle 34a ist zu einer Ausgabe eines Werts eines Betriebsparameters an einen Bediener vorgesehen. Beispielsweise könnte die Bedienerschnittstelle 34a den Wert des Betriebsparameters an einen Bediener optisch und/oder akustisch ausgeben.

Die Induktionskochfeldvorrichtung 10a weist eine Steuereinheit 36a auf. Die Steuereinheit 36a ist dazu vorgesehen, in Abhängigkeit von mittels der Bedienerschnittstelle 34a eingegebenen Betriebsparametern Aktionen auszuführen und/oder Einstellungen zu verändern.

Die Induktionskochfeldvorrichtung 10a weist eine Vielzahl von überlappenden Induktionsheizelementen 12a auf (vgl. Fig. 2). Von mehrfach vorhandenen Objekten ist in den Figuren jeweils lediglich eines mit einem Bezugszeichen versehen.

Im vorliegenden Ausführungsbeispiel sind die Induktionsheizelemente 12a in einer Reihe angeordnet. Alternativ könnten die Induktionsheizelemente 12a in Form einer Matrix angeordnet sein. Die Induktionsheizelemente 12a weisen im vorliegenden Ausführungsbeispiel bei einer senkrechten Betrachtung auf zumindest eine Haupterstreckungsebene eines der Induktionsheizelemente 12a eine im Wesentlichen kreisförmige Gestalt auf.

Die Induktionskochfeldvorrichtung 10a könnte beispielsweise zusätzlich zu den überlappenden Induktionsheizelementen 12a zumindest ein weiteres Induktionsheizelement (nicht dargestellt) aufweisen, welches insbesondere überlappungsfrei zu den überlappenden Induktionsheizelementen 12a angeordnet sein könnte.

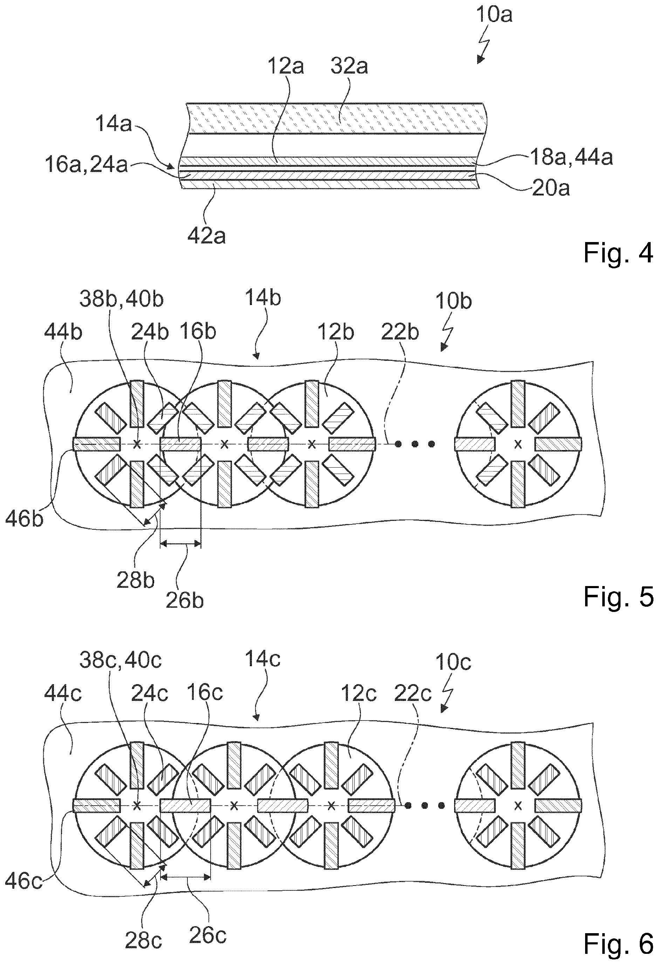

Die Induktionsheizelemente 12a sind dazu vorgesehen, auf der Kochfeldplatte 32a oberhalb der Induktionsheizelemente 12a aufgestelltes Gargeschirr zu erhitzen. In einem Betriebszustand stellen die Induktionsheizelemente 12a, welche insbesondere aktiviert sind, einen magnetischen Fluss bereit, welcher insbesondere zu einer Erhitzung von aufgestelltem Gargeschirr vorgesehen ist. Die Induktionsheizelemente 12a, welche insbesondere aktiviert sind, führen in einem Betriebszustand aufgestelltem Gargeschirr, insbesondere mittels des von den Induktionsheizelementen bereitgestellten magnetischen Flusses, Energie zu. Die Steuereinheit 32a regelt in einem Betriebszustand eine Energiezufuhr zu den insbesondere aktivierten Induktionsheizelementen 12a. In einer Einbaulage sind die Induktionsheizelemente 12a unterhalb der Kochfeldplatte 32a angeordnet (vgl. Fig. 4).

Die Induktionskochfeldvorrichtung 10a weist eine Leiterplatte 44a auf (vgl. Fig. 2 und 4). Die Leiterplatte 44a ist im vorliegenden Ausführungsbeispiel zweilagig ausgebildet. Die Induktionsheizelemente 12a sind an der Leiterplatte 44a angeordnet. Zueinander benachbart angeordnete Induktionsheizelemente 12a sind auf verschiedenen Lagen der Leiterplatte 44a angeordnet.

Die Induktionskochfeldvorrichtung 10a weist eine Magnetflussbündelungseinheit 14a auf (vgl. Fig. 2 bis 4). Die Magnetflussbündelungseinheit 14a ist zu einer Bündelung eines von den Induktionsheizelementen 12a bereitgestellten magnetischen Flusses vorgesehen. In einem Betriebszustand bündelt die Magnetflussbündelungseinheit 14a einen von Induktionsheizelementen 12a, welche insbesondere aktiviert sind, bereitgestellten magnetischen Fluss. Die Magnetflussbündelungseinheit 14a ist den überlappenden Induktionsheizelementen 12a zugeordnet.

Die Induktionskochfeldvorrichtung 10a weist ein Raumteilerelement 42a auf (vgl. Fig. 3 und 4). Das Raumteilerelement 42a ist im vorliegenden Ausführungsbeispiel als ein Abschirmelement ausgebildet. In einem montierten Zustand unterteilt das Raumteilerelement 42a einen von dem Kochfeldaußengehäuse unterteilten Lagerraum, innerhalb welchem insbesondere die Induktionsheizelemente 12a und die Magnetflussbündelungseinheit 14a angeordnet sind.

In einer Einbaulage ist die Magnetflussbündelungseinheit 14a oberhalb des Raumteilerelements 42a angeordnet. Die Magnetflussbündelungseinheit 14a ist in einer Einbaulage auf dem Raumteilerelement 42a befestigt. Die Leiterplatte 44a ist in einer Einbaulage oberhalb der Magnetflussbündelungseinheit 14a und damit insbesondere oberhalb des Raumteilerelements 42a angeordnet. Bezüglich einer Haupterstreckungsebene eines der Induktionsheizelemente 12a sind die Magnetflussbündelungseinheit 14a und die Induktionsheizelemente 12a in zwei räumlich voneinander getrennten Schichten 18a, 20a angeordnet (vgl. Fig. 4).

Die Magnetflussbündelungseinheit 14a weist mehrere Magnetflussbündelungselemente 16a auf (vgl. Fig. 2 bis 4). Jeweils eines der Magnetflussbündelungselemente 16a ist zur Flussbündelung zweien der überlappenden Induktionsheizelemente 12a zugeordnet. Im Folgenden wird lediglich eines der Magnetflussbündelungselemente 16a beschrieben.

Bei einer senkrechten Betrachtung auf eine Haupterstreckungsebene eines der Induktionsheizelemente 12a ist das Magnetflussbündelungselement 16a zu einem Großteil innerhalb eines Überlappungsbereichs der Induktionsheizelemente 12a angeordnet. Das Magnetflussbündelungselement 16a ist bei einer senkrechten Betrachtung auf eine Haupterstreckungsebene eines der Induktionsheizelemente 12a entlang einer gedachten Verbindungslinie 22a von Schwerpunkten 38a und/oder Mittelpunkten 40a der Induktionsheizelemente 12a angeordnet.

Die Magnetflussbündelungseinheit 14a weist eine Vielzahl von weiteren Magnetflussbündelungselementen 24a auf (vgl. Fig. 2 und 3). Im vorliegenden Ausführungsbeispiel weist die Magnetflussbündelungseinheit 14a pro Induktionsheizelement 12a vier weitere Magnetflussbündelungselemente 24a auf. Im Folgenden wird lediglich eines der weiteren Magnetflussbündelungselemente 24a beschrieben.

Das weitere Magnetflussbündelungselement 24a ist im vorliegenden Ausführungsbeispiel genau einem der Induktionsheizelemente 12a zugeordnet. Den Induktionsheizelementen 12a ist jeweils eine identische Anzahl an Magnetflussbündelungselementen 16a, 24a zugeordnet. Im vorliegenden Ausführungsbeispiel ist jedem der Induktionsheizelemente 12a eine Anzahl von sechs Magnetflussbündelungselementen 16a, 24a zugeordnet. Jedem der Induktionsheizelemente 12a ist im vorliegenden Ausführungsbeispiel eine Anzahl von zwei Magnetflussbündelungselementen 16a und eine Anzahl von vier weiteren Magnetflussbündelungselementen 24a zugeordnet.

Im vorliegenden Ausführungsbeispiel sind das Magnetflussbündelungselement 16a und das weitere Magnetflussbündelungselement 24a im Wesentlichen identisch ausgebildet.

Bei einer senkrechten Betrachtung auf eine Haupterstreckungsebene eines der Induktionsheizelemente 12a überragt das weitere Magnetflussbündelungselement 24a das Induktionsheizelement 12a teilweise. Das weitere Magnetflussbündelungselement 24a weist einen Überragungsteilbereich 46a auf (vgl. Fig. 2). Bei einer senkrechten Betrachtung auf eine Haupterstreckungsebene eines der Induktionsheizelemente 12a ist der Überragungsteilbereich 46a außerhalb einer von dem Induktionsheizelement 12a, welchem das weitere Magnetflussbündelungselement 24a zugeordnet ist, aufgespannten Fläche angeordnet.

In einem Verfahren zu einem Betrieb einer Induktionskochfeldvorrichtung 10a wird ein von den Induktionsheizelementen 12a, welche insbesondere aktiviert sind, bereitgestellter magnetischer Fluss gemeinsam gebündelt, und zwar insbesondere durch die Magnetflussbündelungseinheit 14a.

In Fig. 5 bis 11 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 4 verwiesen werden kann. Zur Unterscheidung der Ausführungsbeispiele ist der Buchstabe a in den Bezugszeichen des Ausführungsbeispiels in den Fig. 1 bis 4 durch die Buchstaben b bis h in den Bezugszeichen des Ausführungsbeispiels der Fig. 5 bis 11 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 4 verwiesen werden.

Fig. 5 zeigt eine weitere Induktionskochfeldvorrichtung 10b mit einer Vielzahl von überlappenden Induktionsheizelementen 12b, welche in einer Reihe angeordnet sind. Eine Magnetflussbündelungseinheit 14b der Induktionskochfeldvorrichtung 10b weist mehrere Magnetflussbündelungselemente 16b auf. Im Folgenden wird lediglich eines der Magnetflussbündelungselemente 16b beschrieben.

Das Magnetflussbündelungselement 16b, welches zwei benachbart angeordneten überlappenden Induktionsheizelementen 12b zur Flussbündelung zugeordnet ist, ist bei einer senkrechten Betrachtung auf eine Haupterstreckungsebene eines der Induktionsheizelemente 12b entlang einer gedachten Verbindungslinie 22b von Schwerpunkten 38b und/oder Mittelpunkten 40b der Induktionsheizelemente 12b angeordnet.

Die Magnetflussbündelungseinheit 14b weist eine Vielzahl von weiteren Magnetflussbündelungselementen 24b auf. Im vorliegenden Ausführungsbeispiel weist die Magnetflussbündelungseinheit 14b pro Induktionsheizelement 12b vier weitere Magnetflussbündelungselemente 24b auf. Im Folgenden wird lediglich eines der weiteren Magnetflussbündelungselemente 24b beschrieben.

Das Magnetflussbündelungselement 16b weist eine Längserstreckung 26b auf, welche sich von einer Längserstreckung 28b des weiteren Magnetflussbündelungselements 24b unterscheidet. Die Längserstreckung 26b des Magnetflussbündelungselements 16b ist größer als die Längserstreckung 28b des weiteren Magnetflussbündelungselements 24b.

Ein Großteil der weiteren Magnetflussbündelungselemente 24b ist im vorliegenden Ausführungsbeispiel zwei benachbart zueinander angeordneten überlappenden Induktionsheizelementen 12b zugeordnet. Mit Ausnahme von vier weiteren Magnetflussbündelungselementen 24b, von welchen jeweils zwei genau einem der randseitigen Induktionsheizelemente 12b zugeordnet sind, sind alle weiteren Magnetflussbündelungselemente 24b zwei benachbart zueinander angeordneten überlappenden Induktionsheizelemente 12b zugeordnet.

Fig. 6 zeigt eine weitere Induktionskochfeldvorrichtung 10c mit einer Vielzahl von überlappenden Induktionsheizelementen 12c. Eine Längserstreckung 26c eines Magnetflussbündelungselements 16c einer Magnetflussbündelungseinheit 14c ist größer als eine Längserstreckung 28c eines weiteren Magnetflussbündelungselements 24c der Magnetflussbündelungseinheit 14c. Das weitere Magnetflussbündelungselement 24c ist im vorliegenden Ausführungsbeispiel genau einem der Induktionsheizelemente 12c zugeordnet. Im vorliegenden Ausführungsbeispiel sind die Induktionsheizelemente 12c in einer Reihe angeordnet.

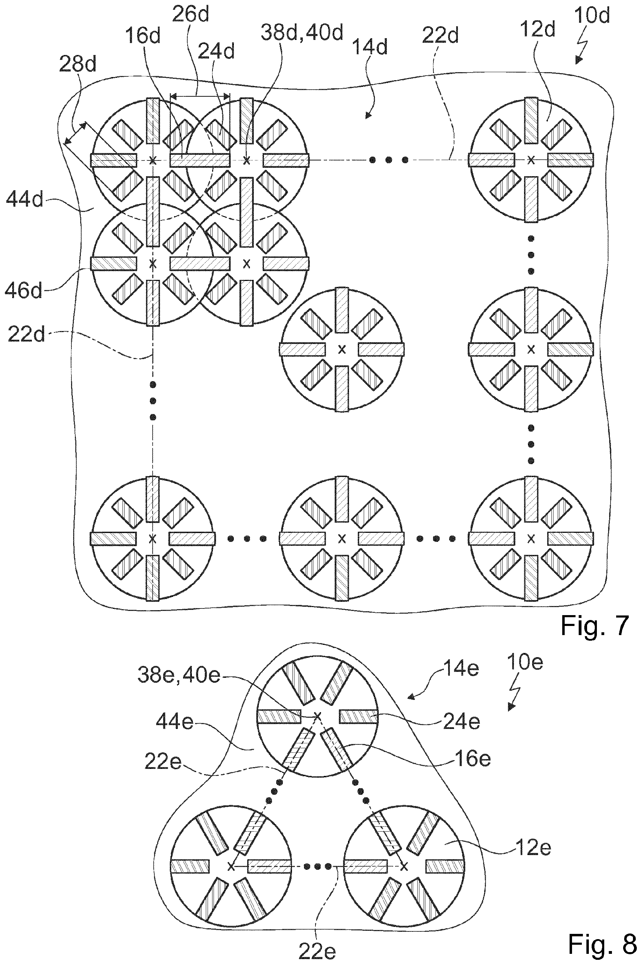

Fig. 7 zeigt eine weitere Induktionskochfeldvorrichtung 10d mit einer Vielzahl von überlappenden Induktionsheizelementen 12d. Die Induktionsheizelemente 12d sind in Form einer Matrix angeordnet. Die Matrix entspricht einer regulären mathematischen Matrix, in welcher Zeilen und Spalten in regulärem Muster unversetzt relativ zueinander angeordnet sind. Eine Magnetflussbündelungseinheit 14d der Induktionskochfeldvorrichtung 10d weist mehrere Magnetflussbündelungselemente 16d auf.

Die Magnetflussbündelungselemente 16d, welche jeweils zwei benachbart angeordneten überlappenden Induktionsheizelementen 12d zur Flussbündelung zugeordnet sind, sind bei einer senkrechten Betrachtung auf eine Haupterstreckungsebene eines der Induktionsheizelemente 12d entlang von gedachten Verbindungslinien 22d von Schwerpunkten 38d und/oder Mittelpunkten 40d der Induktionsheizelemente 12d angeordnet. Die gedachten Verbindungslinien 22d sind parallel zu Zeilenvektoren und Spaltenvektoren der Matrix ausgerichtet.

Das Magnetflussbündelungselement 16d weist eine Längserstreckung 26d auf, welche sich von einer Längserstreckung 28d eines weiteren Magnetflussbündelungselements 24d der Magnetflussbündelungseinheit 14d unterscheidet. Im vorliegenden Ausführungsbeispiel sind die Induktionsheizelemente 12d an einer zweilagig ausgebildeten Leiterplatte 44d angeordnet.

Fig. 8 zeigt eine weitere Induktionskochfeldvorrichtung 10e mit einer Vielzahl von überlappenden Induktionsheizelementen 12e. Die Induktionsheizelemente 12e sind in Form einer Matrix angeordnet. Bei einer senkrechten Betrachtung auf eine Haupterstreckungsebene eines der Induktionsheizelemente 12e weist die Matrix eine im Wesentlichen dreieckige Gestalt auf. Im vorliegenden Ausführungsbeispiel sind die Induktionsheizelemente 12e an einer dreilagig ausgebildeten Leiterplatte 44e angeordnet.

Eine Magnetflussbündelungseinheit 14e der Induktionskochfeldvorrichtung 10e weist mehrere Magnetflussbündelungselemente 16e auf. Die Magnetflussbündelungselemente 16e, welche jeweils zwei benachbart angeordneten überlappenden Induktionsheizelementen 12e zur Flussbündelung zugeordnet sind, sind bei einer senkrechten Betrachtung auf eine Haupterstreckungsebene eines der Induktionsheizelemente 12e entlang von gedachten Verbindungslinien 22e von Schwerpunkten 38e und/oder Mittelpunkten 40e der Induktionsheizelemente 12e angeordnet.

Ein Teil der gedachten Verbindungslinien 22e ist parallel zu Zeilenvektoren der Matrix ausgerichtet. Ein Teil der gedachten Verbindungslinien 22e ist schräg relativ zu Zeilenvektoren und/oder zu Spaltenvektoren der Matrix ausgerichtet. Die Verbindungslinien 22e, welche schräg relativ zu Zeilenvektoren und/oder zu Spaltenvektoren der Matrix ausgerichtet sind, schließen im vorliegenden Ausführungsbeispiel mit den Zeilenvektoren der Matrix einen kleinsten Winkel von im Wesentlichen 60° ein. Die Verbindungslinien 22e, welche schräg relativ zu Zeilenvektoren und/oder zu Spaltenvektoren der Matrix ausgerichtet sind, schließen im vorliegenden Ausführungsbeispiel mit den Spaltenvektoren der Matrix einen kleinsten Winkel von im Wesentlichen 30° ein.

Im vorliegenden Ausführungsbeispiel sind die Magnetflussbündelungselemente 16e und weitere Magnetflussbündelungselemente 24e der Magnetflussbündelungseinheit 14e im Wesentlichen identisch ausgebildet.

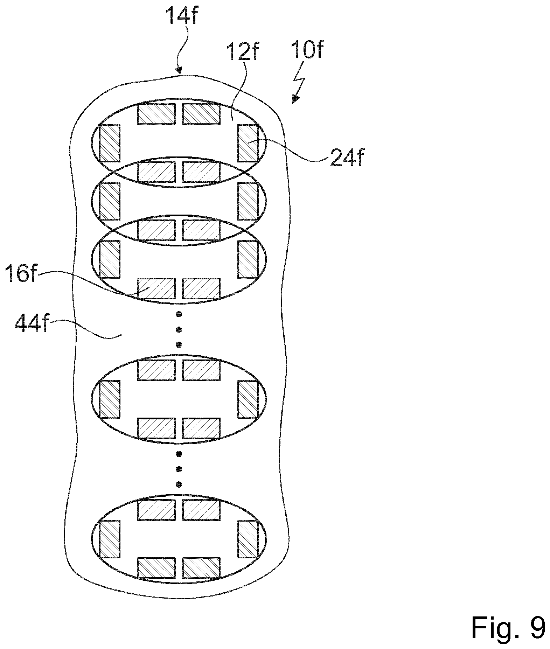

Fig. 9 zeigt eine weitere Induktionskochfeldvorrichtung 10f mit einer Vielzahl von überlappenden Induktionsheizelementen 12f, welche in einer Reihe angeordnet sind. Die Induktionsheizelemente 12f weisen im vorliegenden Ausführungsbeispiel bei einer senkrechten Betrachtung auf zumindest eine Haupterstreckungsebene eines der Induktionsheizelemente 12f eine im Wesentlichen ellipsenförmige Gestalt auf.

Die Induktionsheizelemente 12f sind entlang ihrer jeweiligen Längsseiten überlappend angeordnet. Eine Reihenlinie, entlang welcher die Induktionsheizelemente 12f benachbart zueinander angeordnet sind, ist senkrecht zu jeweiligen Längserstreckungen der Induktionsheizelemente 12f ausgerichtet.

Eine Magnetflussbündelungseinheit 14f der Induktionskochfeldvorrichtung 10f weist mehrere Magnetflussbündelungselemente 16f auf. Jeweils zwei überlappenden Induktionsheizelementen 12f sind zwei Magnetflussbündelungselemente 16f zur Flussbündelung zugeordnet.

Die Magnetflussbündelungseinheit 14f weist eine Vielzahl von weiteren Magnetflussbündelungselementen 24f auf. Die weiteren Magnetflussbündelungselemente 24f sind jeweils genau einem der Induktionsheizelemente 12f zugeordnet. Jedem der Induktionsheizelemente 12f sind sechs Magnetflussbündelungselemente 16f, 24f zugeordnet. Im vorliegenden Ausführungsbeispiel sind die Magnetflussbündelungselemente 16f und die weiteren Magnetflussbündelungselemente 24f im Wesentlichen identisch ausgebildet.

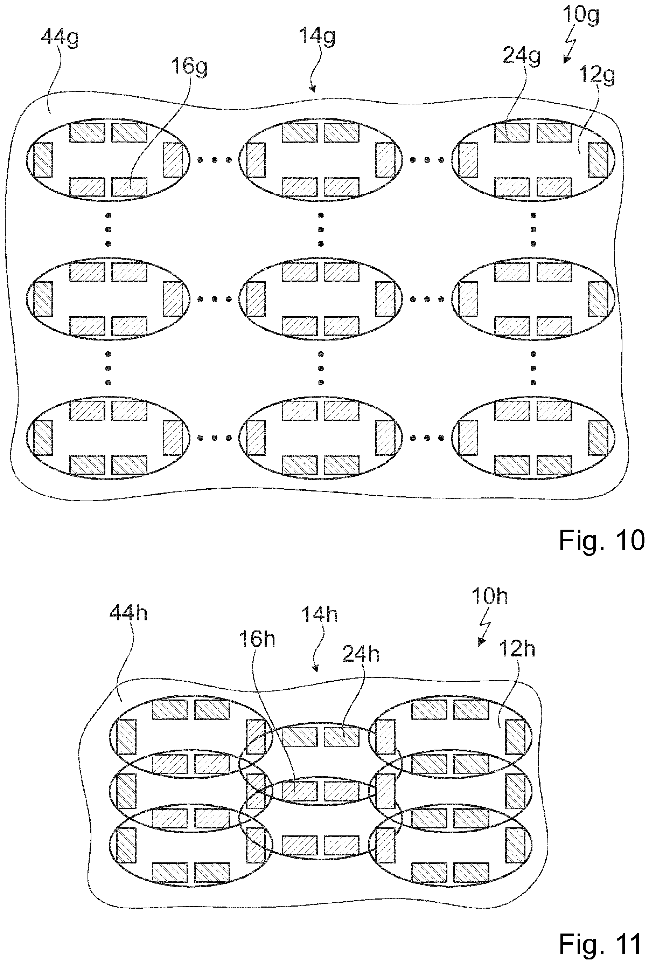

Fig. 10 zeigt eine weitere Induktionskochfeldvorrichtung 10g mit einer Vielzahl von überlappenden Induktionsheizelementen 12g, welche in Form einer regulären Matrix angeordnet sind. Induktionsheizelemente 12g, welche bei einer senkrechten Betrachtung auf eine Haupterstreckungsebene eines der Induktionsheizelemente 12g in der Zeile und Spalte, in der sie angeordnet sind, von zwei Induktionsheizelementen 12g umgeben sind, sind ausschließlich Magnetflussbündelungselementen 16g zugeordnet, welche zur Flussbündelung zwei überlappenden Induktionsheizelementen 12g zugeordnet sind.

Bei einer senkrechten Betrachtung auf eine Haupterstreckungsebene eines der Induktionsheizelemente 12g sind randseitig angeordneten Induktionsheizelementen 12g je nach Position in der Matrix zumindest ein weiteres Magnetflussbündelungselement 24g und maximal drei weitere Magnetflussbündelungselemente 24g zugeordnet.

Fig. 11 zeigt eine weitere Induktionskochfeldvorrichtung 10h mit einer Vielzahl von überlappenden Induktionsheizelementen 12h, welche in Form einer Matrix angeordnet sind. Benachbart zueinander angeordnete Spalten der Matrix sind versetzt relativ zueinander angeordnet. Die versetzt zueinander angeordneten Spalten der Matrix sind im vorliegenden Ausführungsbeispiel bei einer senkrechten Betrachtung auf eine Haupterstreckungsebene eines der Induktionsheizelemente 12h um eine halbe Quererstreckung der Induktionsheizelemente 12h versetzt zueinander angeordnet.

Eine Magnetflussbündelungseinheit 14h der Induktionskochfeldvorrichtung 10h weist eine Vielzahl von Magnetflussbündelungselementen 16h auf. Ein Teil der Magnetflussbündelungselemente 16h ist zwei überlappenden Induktionsheizelementen 12h zugeordnet. Ein Teil der Magnetflussbündelungselemente 16h ist drei überlappenden Induktionsheizelementen 12h zugeordnet.

### Bezugszeichen

- 10: Induktionskochfeldvorrichtung
- 12: Induktionsheizelement
- 14: Magnetflussbündelungseinheit
- 16: Magnetflussbündelungselement
- 18: Schicht
- 20: Schicht
- 22: Verbindungslinie
- 24: Weiteres Magnetflussbündelungselement
- 26: Längserstreckung
- 28: Längserstreckung
- 30: Induktionskochfeld
- 32: Kochfeldplatte
- 34: Bedienerschnittstelle
- 36: Steuereinheit
- 38: Schwerpunkt
- 40: Mittelpunkt
- 42: Raumteilerelement
- 44: Leiterplatte
- 46: Überragungsteilbereich

## Patentansprüche

1. Induktionskochfeldvorrichtung mit zumindest zwei überlappenden Induktionsheizelementen (12a-g), und mit zumindest einer Magnetflussbündelungseinheit (14a-g), die zu einer Bündelung zumindest eines von zumindest einem der Induktionsheizelemente (12a-g) bereitgestellten magnetischen Flusses vorgesehen ist und die zumindest ein Magnetflussbündelungselement (16a-g) aufweist, welches zur Flussbündelung den überlappenden Induktionsheizelementen (12a-g) zugeordnet ist, wobei die Magnetflussbündelungseinheit (14a-g) zumindest ein weiteres Magnetflussbündelungselement (24a-g) aufweist, welches zumindest einem der Induktionsheizelemente (12a-g) zugeordnet ist, **dadurch gekennzeichnet, dass** den Induktionsheizelementen (12a-g) jeweils eine identische Anzahl an Magnetflussbündelungselementen (16a-g) zugeordnet ist, wobei die überlappenden Induktionsheizelemente (15a-g) zueinander identisch sind.

2. Induktionskochfeldvorrichtung nach Anspruch 1, **dadurch gekennzeichnet, dass** die Magnetflussbündelungseinheit (14a-g) und die Induktionsheizelemente (12a-g) bezüglich zumindest einer Haupterstreckungsebene zumindest eines der Induktionsheizelemente (12a-g) in zumindest zwei räumlich voneinander getrennten Schichten (18a-g, 20a-g) angeordnet sind.

3. Induktionskochfeldvorrichtung nach Anspruch 1 oder 2, **dadurch gekennzeichnet, dass** das Magnetflussbündelungselement (16a-e) bei einer senkrechten Betrachtung auf zumindest eine Haupterstreckungsebene wenigstens eines der Induktionsheizelemente (12a-e) entlang einer gedachten Verbindungslinie (22a-e) von Schwerpunkten (38a-e) und/oder Mittelpunkten (40a-e) der Induktionsheizelemente (12a-e) angeordnet ist.

4. Induktionskochfeldvorrichtung nach einem der vorhergehenden Ansprüche, **dadurch gekennzeichnet, dass** das weitere Magnetflussbündelungselement (24a; 24c-g) genau einem der Induktionsheizelemente (12a; 12c-g) zugeordnet ist.

5. Induktionskochfeldvorrichtung nach einem der vorhergehenden Ansprüche, **dadurch gekennzeichnet, dass** das Magnetflussbündelungselement (16b-d) eine Längserstreckung (26b-d) aufweist, welche sich von einer Längserstreckung (28b-d) des weiteren Magnetflussbündelungselements (24b-d) unterscheidet.

6. Induktionskochfeldvorrichtung nach einem der vorhergehenden Ansprüche, **dadurch gekennzeichnet, dass** das Magnetflussbündelungselement (16a; 16eg) und das weitere Magnetflussbündelungselement (24a; 24e-g) wenigstens im Wesentlichen identisch ausgebildet sind.

7. Induktionskochfeldvorrichtung nach einem der vorhergehenden Ansprüche, **dadurch gekennzeichnet, dass** das weitere Magnetflussbündelungselement (24b-d) das Induktionsheizelement (12b-d) bei einer senkrechten Betrachtung auf zumindest eine Haupterstreckungsebene wenigstens eines der Induktionsheizelemente (12b-d) wenigstens teilweise überragt.

8. Induktionskochfeld mit zumindest einer Induktionskochfeldvorrichtung (10a-g) nach einem der vorhergehenden Ansprüche.

9. Verfahren zu einem Betrieb einer Induktionskochfeldvorrichtung (10a-g) nach einem der Ansprüche 1 bis 7, **dadurch gekennzeichnet, dass** ein von den Induktionsheizelementen (12a-g) bereitgestellter magnetischer Fluss gemeinsam gebündelt wird.

## Claims

1. Induction hob device having at least two overlapping induction heating elements (12a-g) and having at least one magnetic flux bundling unit (14a-g), which is provided to bundle at least one magnetic flux provided by at least one of the induction heating elements (12a-g), and which has at least one magnetic flux bundling element (16a-g), which, for flux bundling purposes, is assigned to the overlapping induction heating elements (12a-g), wherein the magnetic flux bundling unit (14a-g) has at least one further magnetic flux bundling element (24a-g), which is assigned to at least one of the induction heating elements (12a-g), **characterised in that** an identical number of magnetic flux bundling elements (16a-g) is assigned to the induction heating elements (12a-g) in each case, wherein the overlapping induction heating elements (15a-g) are identical to one another.

2. Induction hob device according to claim 1, **characterised in that** with respect to at least one main extension plane of at least one of the induction heating elements (12a-g), the magnetic flux bundling unit (14a-g) and the induction heating elements (12a-g) are arranged in at least two layers (18a-g, 20a-g) which are spatially separated from one another.

3. Induction hob device according to claim 1 or 2, **characterised in that** the magnetic flux bundling element (16a-e) is arranged along an imaginary connecting line (22a-e) of centres of gravity (38a-e) and/or centre points (40a-e) of the induction heating elements (12a-e) when observed vertically onto at least one main extension plane of at least one of the induction heating elements (12a-e).

4. Induction hob device according to one of the preceding claims, **characterised in that** the further magnetic flux bundling element (24a; 24c-g) is assigned to precisely one of the induction heating elements (12a; 12c-g).

5. Induction hob device according to one of the preceding claims, **characterised in that** the magnetic flux bundling element (16b-d) has a longitudinal extension (26b-d) which differs from a longitudinal extension (28b-d) of the further magnetic flux bundling element (24b-d).

6. Induction hob device according to one of the preceding claims, **characterised in that** the magnetic flux bundling element (16a; 16e-g) and the further magnetic flux bundling element (24a; 24e-g) are embodied to be at least substantially identical.

7. Induction hob device according to one of the preceding claims, **characterised in that** the further magnetic flux bundling element (24b-d) at least partially overhangs the induction heating element (12b-d) when observed vertically onto at least one main extension plane of at least one of the induction heating elements (12b-d).

8. Induction hob with at least one induction hob device (10a-g) according to one of the preceding claims.

9. Method for operating an induction hob device (10a-g) according to one of claims 1 to 7, **characterised in that** a magnetic flux provided by the induction heating elements (12a-g) is bundled together.

## Revendications

1. Dispositif de table de cuisson à induction comprenant au moins deux éléments chauffants à induction se chevauchant (12a-g) et au moins une unité de concentration de flux magnétique (14a-g), qui est configurée pour concentrer au moins un flux magnétique produit par au moins un des éléments chauffants à induction (12a-g) et qui comprend au moins un élément de concentration de flux magnétique (16a-g), lequel est associé pour concentrer le flux aux éléments chauffants à induction se chevauchant (12a-g), dans lequel l'unité de concentration de flux magnétique (14a-g) comprend au moins un élément de concentration de flux magnétique supplémentaire (24a-g), qui est associé à au moins un des éléments chauffants à induction (12a-g),
**caractérisé en ce qu'**un nombre identique d'éléments de concentration de flux magnétique (16a-g) est associé respectivement aux éléments chauffants à induction (12a-g), dans lequel les éléments chauffants à induction se chevauchant (15a-g) sont identiques l'un à l'autre.

2. Dispositif de table de cuisson à induction selon la revendication 1, **caractérisé en ce que** l'unité de concentration de flux magnétique (14a-g) et les éléments chauffants à induction (12a-g) sont disposés dans au moins deux couches (18a-g, 20a-g) séparées dans l'espace l'une de l'autre, par rapport à au moins un plan d'extension principal d'au moins un des éléments chauffants à induction (12a-g).

3. Dispositif de table de cuisson à induction selon la revendication 1 ou 2, **caractérisé en ce que** l'élément de concentration de flux magnétique (16a-e), dans une vue perpendiculaire à au moins un plan d'extension principal d'au moins un des éléments chauffants à induction (12a-e), est disposé le long d'une ligne imaginaire (22a-e) reliant des centres de gravité (38a-e) et/ou des points médians (40a-e) des éléments chauffants à induction (12a-e).

4. Dispositif de table de cuisson à induction selon l'une des revendications précédentes, **caractérisé en ce que** l'élément de concentration de flux magnétique supplémentaire (24a, 24c-g) est associé exactement à l'un des éléments chauffants à induction (12a, 12c-g).

5. Dispositif de table de cuisson à induction selon l'une des revendications précédentes, **caractérisé en ce que** l'élément de concentration de flux magnétique (16b-d) présente une extension longitudinale (26b-d), qui se différencie d'une extension longitudinale (28b-d) de l'élément de concentration de flux magnétique supplémentaire (24b-d).

6. Dispositif de table de cuisson à induction selon l'une des revendications précédentes, **caractérisé en ce que** l'élément de concentration de flux magnétique (16a, 16e-g) et l'élément de concentration de flux magnétique supplémentaire (24a, 24e-g) sont formés au moins essentiellement de façon identique.

7. Dispositif de table de cuisson à induction selon l'une des revendications précédentes, **caractérisé en ce que** l'élément de concentration de flux magnétique supplémentaire (24b-d), dans une vue perpendiculaire à au moins un plan d'extension principal d'au moins un des éléments chauffants à induction (12a-d), surplombe au moins en partie l'un des éléments chauffants à induction (12b-d).

8. Table de cuisson à induction comprenant au moins un dispositif de table de cuisson à induction (10a-g) selon l'une des revendications précédentes.

9. Procédé de fonctionnement d'un dispositif de table de cuisson à induction (10a-g) selon l'une des revendications 1 à 7, **caractérisé en ce qu'**un flux magnétique produit par les éléments chauffants à induction (12a-g) est concentré en commun.
